Europäisches Patentamt

European Patent Office

Office européen des brevets

(11) Veröffentlichungsnummer: **0 126 468**
**B1**

(12) # EUROPÄISCHE PATENTSCHRIFT

(45) Veröffentlichungstag der Patentschrift:
**22.04.87**

(51) Int. Cl.⁴: **F 02 B 37/10, F 02 B 37/14**

(21) Anmeldenummer: **84105713.6**

(22) Anmeldetag: **18.05.84**

(54) **Verbrennungskraftmaschine mit einem durch Abgasenergie betreibbaren Lader.**

(30) Priorität: **18.05.83 DE 3318093**
**18.05.83 DE 3318162**

(43) Veröffentlichungstag der Anmeldung:
**28.11.84 Patentblatt 84/48**

(45) Bekanntmachung des Hinweises auf die Patenterteilung:
**22.04.87 Patentblatt 87/17**

(84) Benannte Vertragsstaaten:
**DE FR GB IT SE**

(56) Entgegenhaltungen:
**FR - A - 2 465 076**
**GB - A - 412 830**
**GB - A - 815 494**
**GB - A - 1 024 846**

(73) Patentinhaber: **Schatz, Oskar, Dr.-Ing.,**
**Waldpromenade 16, D-8035 Gauting (DE)**

(72) Erfinder: **Schatz, Oskar, Dr.-Ing., Waldpromenade 16,**
**D-8035 Gauting (DE)**

(74) Vertreter: **Lamprecht, Helmut, Dipl.-Ing.,**
**Corneliusstrasse 42, D-8000 München 5 (DE)**

ACTORUM AG

## Beschreibung

Die Erfindung betrifft eine Verbrennungskraftmaschine mit einem mechanisch durch die Abtriebswelle und/oder durch Abgasenergie betreibbaren Lader zur Verdichtung und Förderung der Ladeluft, der mindestens jeweils eine Abgaskammer und eine Ladeluftkammer aufweist, die durch eine bewegliche Trennwand voneinander getrennt sind und von denen die Abgaskammer mit einem Abgaseinlass und einem Abgasauslass und die Ladeluftkammer mit einem Ladelufteinlass und einem Ladeluftauslass versehen ist, wobei dem Abgaseinlass eine Einrichtung zur taktweisen Beaufschlagung der Abgaskammer mit Abgas zugeordnet ist und die Trennwand durch eine zur Kraftübertragung in beiden Richtungen geeignete Kraftübertragungseinrichtung mit der Abtriebswelle der Verbrennungskraftmaschine verbunden ist.

Eine theoretisch bekannte Verbrennungskraftmaschine dieser Art, wie sie z.B. aus der FR-A-2 465 076 bekannt ist, ist insbesondere für Hubkolbenmotoren für Kraftfahrzeuge bestimmt.

Die in der FR-A-2 465 076 beschriebene Maschine weist als Kraftübertragungseinrichtung einen einfachen Kurbeltrieb auf, was die später noch erläuterten Probleme mit sich bringt.

Bei der heute üblichen Aufladung von Dieselmotoren, wofür man fast auschliesslich Abgasturbolader verwendet, ergeben sich drei markante Bereiche:

Bereich niedriger Drehzahlen, wobei der Abgasturbolader zu wenig Luft fördert;

ein mittlerer Bereich, bei dem Luftbedarf und -angebot etwas ausgeglichen sind und

Bereich hoher Drehzahlen, bei denen das Luftangebot zu hoch ist und deshalb Luft oder Abgase abgeblasen werden.

Ausserdem besteht das Problem, dass bei plötzlicher Lastzunahme der Abgasturbolader mehrere Sekunden – bis zu 7 und 8 Sekunden bei PKW-Motoren – braucht, um den erforderlichen Ladedruck aufzubauen. Ausserdem haben abgasturbogeladene Dieselmotoren in der Regel ein niedrigeres Verdichtungsverhältnis als Saugmotoren, um die Verdichtungsenddrücke und Temperaturen bei Aufladung auf einem akzeptablen Niveau zu halten. Dadurch ergeben sich beim Start dieser Motoren Schwierigkeiten, weil die Verdichtungsenddrücke im nicht aufgeladenen Zustand niedrig sind und die erforderliche Zündtemperatur nur schwer bereitgestellt werden kann. Hierzu sind Starthilfen für den Motor erforderlich.

Es ist weiterhin bekannt, dass insbesondere bei PKW- und stationären Motoren der hohe Anteil an Verlustenergie in den Abgasen dadurch genutzt wird, dass die Abgase in einer Turbine entspannt werden und diese Energie der Abtriebswelle der Verbrennungskraftmaschine zugeführt wird, bzw. zum Antrieb von Hilfsarbeitsvorrichtungen genutzt wird. Die Rückgewinnung von arbeitsfähiger Energie für kleine Verbrennungskraftmaschinen, insbesondere PKW-Antriebe, ist bisher aus Kostengründen unterblieben.

Verwendet man mechanische Lader zur Aufladung von Dieselmotoren, so wird bei der niedrigen Motordrehzahl der erforderliche Luftbedarf gedeckt, bei mittleren und hohen Motordrehzahlen ist aber das Angebot an Luft zu hoch. Insgesamt ist von Nachteil, dass die Leistung für den Antrieb des Laders der Abtriebswelle der Verbrennungskraftmaschine entnommen werden muss. Abhilfe wird hier dadurch geschaffen, dass entweder der mechanische Lader bei mittleren und höheren Drehzahlen ausgeschaltet wird durch eine Kupplung, oder dass ein Getriebe zur Änderung der Übersetzung vorgesehen wird.

Bei Ottomotoren ist die Situation ähnlich, lediglich dass hier die Startschwierigkeiten beim abgasturbogeladenen Motor entfallen. Realisierte Massnahmen zur Rückgewinnung von Wellenenergie aus den Abgasen des Motors für Personenkraftwagen sind bisher nicht bekannt geworden.

Zusammenfassend ist festzustellen, dass für die Aufladung von Verbrennungsmotoren das Angebot an Abgasenergie bei niedrigen Drehzahlen zu gering und bei hohen Drehzahlen zu hoch ist. Will man statt eines mit Abgasenergie betriebenen Laders einen mechanischen Lader verwenden, der auch bei niedrigen Drehzahlen die benötigte Laderenergie liefert, so muss dafür Wellenenergie eingesetzt werden, insbesondere auch bei hohen Drehzahlen, wo die Leistung u.U. gar nicht mehr gefordert ist. Die Verbesserung der Leistungsbilanz durch Wiedergewinnung arbeitsfähiger Energie aus der Abgasenergie ist mit bekannten Vorrichtungen zu teuer, insbesondere bei kleinen Kraftfahrzeugen.

Es ist deshalb theoretisch vorgeschlagen worden, eine Verbrennungskraftmaschine der eingangs erwähnten Art zu schaffen, bei der die Kraftübertragung zwischen Trennwand und Abtriebswelle der Verbrennungskraftmaschine in beiden Richtungen wirksam werden kann, so dass bei unter der erforderlichen Laderenergie liegender Abgasenergie mechanische Energie von der Abtriebswelle der Verbrennungskraftmaschine auf den Lader und von diesem auf die Ladeluft übertragen wird, dass bei einem für die erforderliche Laderleistung ausreichenden Aufkommen an Abgasenergie die Laderenergie der Abgasenergie entnommen wird und dass bei einem die erforderliche Laderenergie übersteigenden Aufkommen an Abgasenergie Abgasenergie auf die Abtriebswelle der Verbrennungskraftmaschine übertragen wird.

Mit diesem Verfahren kann auf kostengünstige Weise mit einem einzigen Gerät, das seine Antriebsenergie sowohl der Abtriebswelle der Verbrennungskraftmaschine als auch dem Abgas dieser Verbrennungskraftmaschine entnehmen kann, sowohl über den Ladeluftauslass die Ladung der Verbrennungskraftmaschine bewirkt, als auch Abgasenergie auf die Abtriebswelle übertragen werden. Es finden also beide Funktionen, Luftverdichtung und Abgasentspannung in ein und demselben Gerät statt, wobei die einzelnen Betriebsweisen gegebenenfalls stufenlos ineinander übergehen können, weil z.B. im Laderbetrieb der Abtriebswelle der Verbrennungskraftmaschine nur soviel Energie entzogen werden muss, dass das Energiedefizit des Abgases etwa bei niedrigen Drehzahlen ausgeglichen wird.

Die Verwendung eines Verdrängerladers, der sowohl mechanisch als auch durch Abgasenergie antreibbar sein soll und der zudem als «Entspanner» in gewissen Betriebsphasen aus der Entspannung des Abgases gewonnene Energie auf die Abtriebswelle der Verbrennungskraftmaschine übertragen soll, bringt verschiedene Regelungsprobleme mit sich.

Die Regelung der Luftmenge kann bei mechanischem wie auch beim Abgasantrieb des Laders durch Verstellung des Laderhubs erreicht werden. Beim Abgasbetrieb mit den natürlichen Abgasimpulsen passt sich die Hubfrequenz des Laders der Zündfrequenz des Motors an. Falls eine Taktgebereinrichtung verwendet wird, über welche Abgasimpulse aus einem Speicher an den Lader abgegeben werden, kann die Taktfrequenz des Taktgebers verändert werden. Beim mechanischen Betrieb besteht noch die Möglichkeit, die Antriebsgeschwindigkeit des Laders zu verändern.

Wird der Lader als Entspanner betrieben, lässt sich nur dann eine wirkungsvolle Ausnützung der Abgasenergie erreichen, wenn die auf die Trennwand des Laders einwirkenden Abgasimpulse mit der durch die mechanische Verbindung mit der Abtriebswelle des Motors bestimmten gleichsinnigen Bewegung der Trennwand zeitlich zusammenfallen, da andernfalls die Abgasenergie sogar bremsend, d.h. energieverzehrend, wirksam würde.

Einrichtungen zur Geschwindigkeitsregelung oder Hubverstellung beim mechanischen Laderantrieb sind kompliziert und teuer und stehen daher gerade dem Einsatz des erläuterten Verfahrens bei kleinen Kraftfahrzeugmotoren im Wege.

Der Erfindung liegt die Aufgabe zugrunde, eine einfache und kostengünstige und dabei zuverlässige Konstruktion zu schaffen, welche die Anpassung der mechanischen Laderbewegung an die im Entspanner-Betrieb auftretenden Abgasimpulse ermöglicht und die es ausserdem gestattet, für den mechanischen Laderbetrieb eine besonders einfache und wirkungsvolle Mengenregelung der Ladeluft durchzuführen.

Die Lösung dieser Aufgabe besteht darin, dass die Kraftübertragungseinrichtung eine Vorrichtung zur Veränderung der Phasenlage zwischen An- und Abtriebsseite aufweist.

Damit kann die Bewegung der Trennwand ohne Beeinträchtigung der mechanischen Verbindung zwischen dem Lader und der Abtriebswelle des Motors auf die in die Abgaskammer des Laders eintretenden Abgasimpulse abgestimmt werden, damit die durch die Entspannung des Abgases in der Abgaskammer freiwerdende Energie die Bewegung der Trennwand unterstützt und damit auf die Abtriebswelle der Verbrennungskraftmaschine übertragen wird.

Wie theoretisch nachweisbar ist, ist bei Einsatz eines mechanischen Verdrängerladers der geringste Bedarf an Laderenergie erforderlich, wenn die vom Lader verdrängte Luft direkt in den zu ladenden Motorzylinder strömt, weil dadurch der zur Verdrängung der Luft in einen Speicher aufzuwendende Energie entfällt. Durch die Veränderung der Phasenlage zwischen An- und Abtrieb des Laders kann der Förderhub des Laders gegenüber der Öffnungszeit des Motorzylinders verstellt werden, wodurch sich das Verhältnis der durch den Motorkolben angesaugten zu der durch den Lader geförderten Luftmenge und damit die Gesamtfüllmenge des Motorzylinders zu verändern.

Die Erfindung ermöglicht also mit einer verhältnismässig einfachen und preiswerten Konstruktion nicht nur die optimale Anpassung der Laderbewegung an die Abgasimpulse im Entspannerbetrieb, sondern auch die sonst nur aufwendig zu lösende Luftmengenregelung im mechanischen Laderbetrieb, wodurch sich die eingangs erläuterte, bisher nur theoretsich erörterte Betriebsweise auch praktisch durchführen lässt, und zwar insbesondere auch bei kleinen Kraftfahrzeugmotoren, wo ihr besondere Bedeutung zukommt.

Eine vorteilhafte Ausgestaltung besteht darin, dass die Kraftübertragungseinrichtung unterbrechbar ist, was z.B. durch eine Kupplung geschehen kann.

Eine besonders vorteilhafte Ausgestaltung besteht darin, dass die Kraftübertragungseinrichtung einen Bandtrieb umfasst, bei dem das Verhältnis der Bandlängen zwischen treibendem und losem Bandtrum steuerbar ist.

Eine Kraftübertragungseinrichtung dieser Art ist zwischen der Kurbelwelle und der zur Ventilbetätigung dienenden Nockenwelle bei Viertakt-Verbrennungsmotoren zur Veränderung der Phasenlage zwischen Kurbelwelle und Nockenwelle aus der GB-A-1 204 846 bekannt.

Die Einrichtung zur taktweisen Beaufschlagung der Abgaskammer kann das Auslassventil bzw. können die Auslassventile der Verbrennungskraftmaschine sein. Man kann aber auch ein Taktgeberventil vorsehen, wobei diesem Taktgeberventil dann ein Abgassammler bzw. -puffer vorgeschaltet werden kann.

Für eine Laderbetriebsweise mit besonders geringem Arbeitsaufwand besteht eine vorteilhafte Ausgestaltung darin, dass das Luftfördervolumen einer Ladeluftkammer des Laders der im zu ladenden Motorzylinder gewünschten Ladeluftmenge entspricht. Noch weiter lässt sich der Arbeitsaufwand senken, wenn nach einer anderen vorteilhaften Konstruktion das Luftfördervolumen einer Ladeluftkammer des Laders der im zu ladenden Motorzylinder zusätzlich zu einer vom Motorkolben angesaugten Luftmenge zu deren Verdichtung auf den Ladedruck gewünschten Luftmenge entspricht.

Anhand der nun folgenden Beschreibung eines in der Zeichnung dargestellten Ausführungsbeispiels der Erfindung wird diese näher erläutert.

Es zeigt:

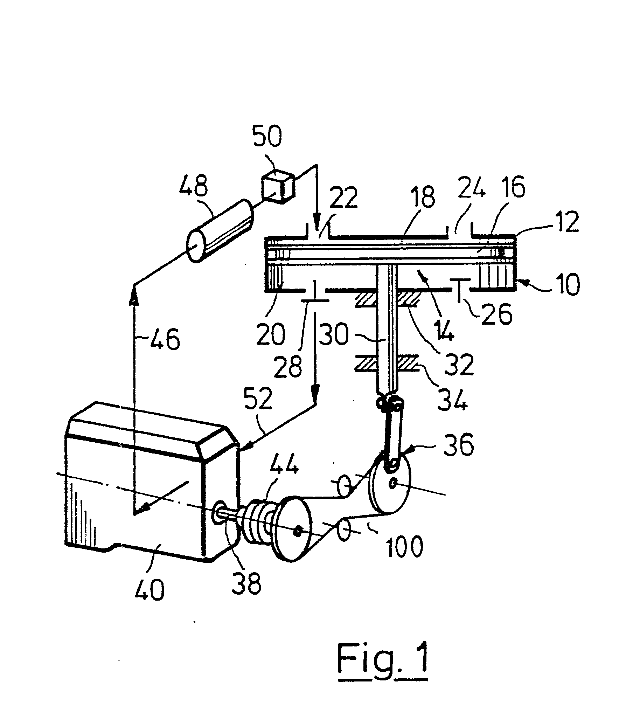

Fig. 1 schematisch in Verbindung mit einem Schnitt durch einen Entspanner-Lader die Anordnung dieses Entspanner-Laders an eine Verbrennungskraftmaschine,

Fig. 2 eine schematische Seitenansicht einer ersten Variante eines für die Anordnung nach Fig. 3 geeigneten Bandtriebs und

Fig. 3 eine schematische Seitenansicht einer zweiten Variante eines solchen Bandtriebs.

Der insgesamt mit 10 bezeichnete Lader-Entspanner besteht aus einem Gehäuse 12, welches eine Laderkammer 14 umschliesst, in der hin- und hergehend beweglich eine Trennwand 16 in Form eines flachen Kolbens angeordnet ist, die den Innenraum der Laderkammer 14 in eine Abgaskammer 18 und eine Ladeluftkammer 20 unterteilt. Die Abgaskammer 18 ist mit einem Abgaseinlass 22 und einem Abgasauslass 24, die Ladeluftkammer 20 mit einem Ladelufteinlass 26 und einem Ladeluftauslass 28 versehen. Die Trennwand 16 ist mit einem Schaft 30 fest verbunden, der ausserhalb der Laderkammer 14 in zwei Führungen 32 und 34 axial verschieblich geführt ist. Der Schaft 30 ist an einen Kurbeltrieb 36 angeschlossen, der geeignet ist, von der schematisch dargestellten Abtriebswelle 38 der Verbrennungskraftmaschine 40 über ein zwischengeschaltetes, mit einer Einrichtung zur Veränderung der Phasenlage zwischen Antrieb und Abtrieb versehen Getriebe 100 und gegebenenfalls über eine Kupplung 44 Energie auf die Trennwand 16 zu deren Betätigung zu übertragen. Die Antriebsverbindung 36, 100, 44 ist so ausgestaltet, dass sie sich auch dazu eignet, Antriebsenergie in entgegengesetzter Richtung, also von der Trennwand 16 auf die Abtriebswelle 38 zu übertragen.

Der Abgaseinlass 22 steht mit der Abgasseite der verbrennungskraftmaschine 40 über ein schematisch angedeutetes Abgassystem 46 in Verbindung, das entweder durch die unmittelbare Wirkung der Abgasauslassventile der Zylinder der Verbrennungskraftmaschine 40 oder unter Zwischenschaltung eines Abgassammlers bzw. -puffers 48 und eines Taktgeberventils 50 die Abgaskammer 18 mit Abgasimpulsen versorgt, die geeignet sind, die Trennwand 16 in Richtung auf die Ladeluftseite der Laderkammer 14 zu bewegen und dadurch die vorher in die Ladeluftkammer 20 angesaugte Ladeluft durch den Ladeluftauslass 28 in Richtung auf das Ladeluftsystem 52 der Verbrennungskraftmaschine auszuschieben und in den bzw. die Zylinder der Verbrennungskraftmaschine mit offenem Einlassventil einzuschieben. Das Ladeluftsystem kann auch gegen die Ladeluftkammer 20 durch eine Rückschlagklappe verschliessbar sein, wenn das Einlassventil an der Verbrennungsmaschine 40 nicht in tolerierbarer Nähe liegt, um den Schadraum des Verdichterbereichs des Lader-Entspanners 10 gering zu halten. Je nach den betrieblichen Gegebenheiten, der Zahl und der Anordnung der Zylinder der Verbrennungskraftmaschine, der räumlichen Anordnung des Lader-Entspanners 10 oder gegebenenfalls auch mehrerer Lader-Entspanner usw. können Abwandlungen im Abgas- und Ladeluftsystem vorteilhaft oder notwendig sein, die im Zusammenhang mit dem Grundgedanken der Erfindung nicht näher erörtert werden müssen. Zwei Betriebsweisen seien aber kurz erwähnt, die einen besonders geringen Arbeitsaufwand für den Laderbetrieb ermöglichen.

Man kann nach einer ersten Variante in den zu ladenden Zylinder die Luft ab Einlassbeginn mit atmosphärischem Druck einströmen lassen und den Druck durch den Entspanner-Lader 10 bis zum Einlassende allmählich bis auf den gewünschten Enddruck erhöhen. Für diese Betriebsweise ist der Entspanner-Lader 10 so dimensioniert, dass das Luftfördervolumen der im zu ladenden Zylinder der Verbrennungskraftmaschine gewünschten Ladeluftmenge entspricht.

Nach einer zweiten Variante wird die zusätzlich zur angesaugten Luft in den Zylinder der Verbrennungskraftmaschine einzubringende Luft während der Kolbenbewegung des Motorzylinders im Bereich des unteren Totpunkts in den Zylinder eingebracht. Für diese Betriebsweise entspricht das Luftfördervolumen des Entspanner-Laders 10 der im zu ladenden Motorzylinder zusätzlich zu einer vom Motorkolben angesaugten Luftmenge zu deren Verdichtung auf den Ladedruck gewünschten Luftmenge.

Nach dem Verdichtungshub der Trennwand 16 wird diese durch den sich aufbauenden Gegendruck zurückbewegt und das Abgas wird aus der Abgaskammer 18 durch den Abgasauslass 24 in das Auspuffsystem der Verbrennungskraftmaschine 40 ausgeschoben.

Das Getriebe 100 in Form eines Bandtriebs umfasst ein Band 110, vorzugsweise einen Zahnriemen, der über insgesamt vier Rollen geführt ist, nämlich eine Antriebsrolle 114, eine Abtriebsrolle 112 und zwischen Abtriebsrolle 112 und Antriebsrolle 114 in Bandlaufrichtung gesehen über eine quer zur Bandlaufrichtung bewegliche Rolle 120, sowie zwischen Antriebsrolle 114 und Abtriebsrolle 112 über eine quer zur Bandlaufrichtung einstellbare Rolle 122. Die Rolle 120 liegt damit am rücklaufenden Trum 116 und die Rolle 122 am antreibenden Trum 118 des Bandes 110 an. Diese Anordnung ist deshalb zweckmässig, weil die Rolle 120 durch eine Feder 124 gegen das Band 110 gedrückt wird, um die gewünschte Bandspannung aufrechtzuerhalten. Durch die Möglichkeit, dass sich die Rolle 120 etwas quer zur Bandlaufrichtung bewegt, ohne dass dies durch eine Verstellung der Rolle 122 veranlasst ist, würde die Anordnung der Rolle 120 im Bereich des antreibenden Trums geringfügige Längenänderungen des antreibenden Trums in unkontrollierter Weise ermöglichen und damit eine Störung des absoluten Gleichlaufs von antreibender Rolle 112 und Abtriebsrolle 114.

Die Rolle 122 ist dagegen in ihrer Lage quer zur Laufrichtung des Bandes 110 genau einstellbar. Beim gezeigten Beispiel ist hierzu die Rolle 122 an einer Kolbenstange 126 gelagert, die mit einem in einem Zylinder 128 verschieblich angeordneten Kolben 130 verbunden ist, der beidseitig hydraulisch beaufschlagbar ist, d.h. es handelt sich beim Zylinder 128 mit dem Kolben 130 um einen doppeltwirkenden Hydraulikzylinder, durch den die Position der Rolle 122 genau einstellbar ist. Die hydraulische Betätigung ermöglicht eine einfache Regelung der Phasenlage des Bandtriebs in Abhängigkeit von extern ermittelten Parametern, wie z.B. den Betriebsdaten des Kraftfahrzeugs und seines Verbrennungsmotors.

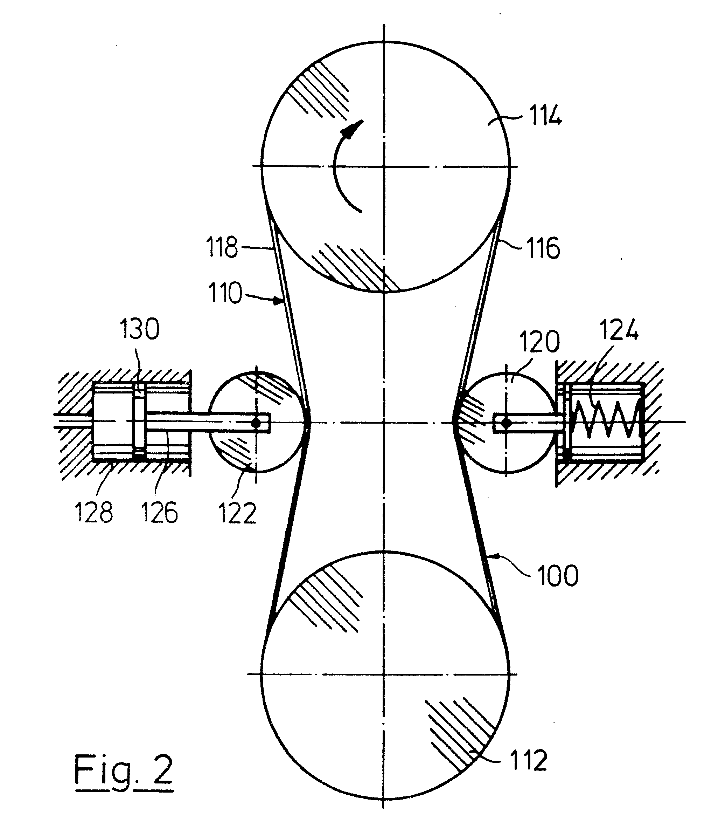

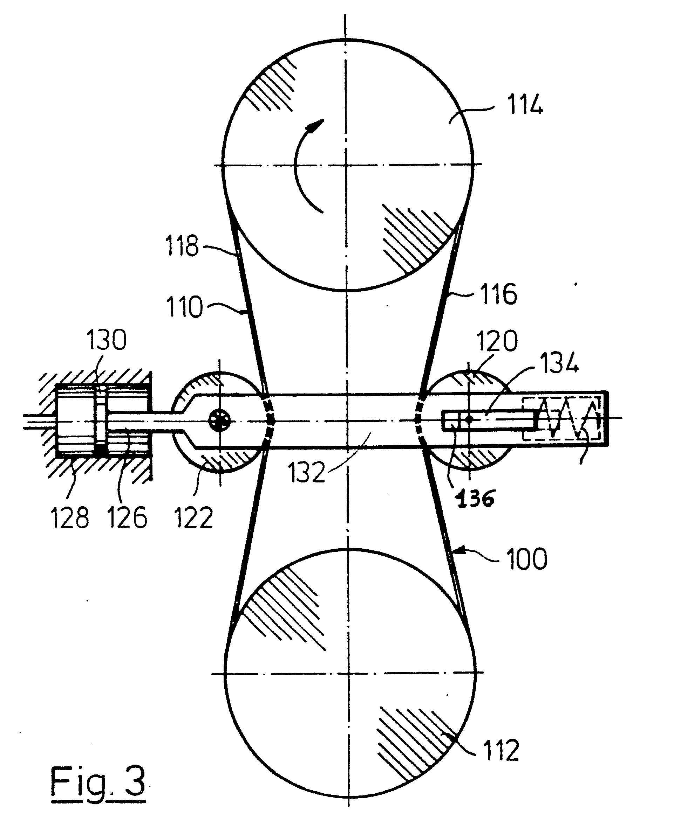

Wird die Rolle 122 in Fig. 2 nach rechts bewegt, verlängert sich das antreibende Trum 118, während sich das rücklaufende Trum 116 entsprechend verkürzt. Die Abtriebsrolle eilt dadurch der Antriebsrolle vor. Bewegt man die Rolle 122 in der Gegenrichtung, gelangt das antreibende Trum 118 allmählich in seine kürzeste, gestreckte Lage, welche man zweckmässig einer Nacheilung der Abtriebsrolle 114 gegenüber der Antriebsrolle 112 zuordnet, während die Phasenverschiebung NULL etwa in der Mitte zwischen diesen beiden Stellungen der Rolle 122 vorgesehen werden sollte, Nacheilung erwünscht ist. Die Anordnung ist bei beiden Ausführungsbeispielen jeweils so getroffen, dass in der einen Endstellung der einstellbaren Rolle 122 das eine Trum 116 oder 118 gestreckt verläuft und das jeweils andere Trum 118 oder 116 dann seine grösste Auslenkung aus der gestreckten Lage aufweist. Unter dieser Voraussetzung sind Variationen in der Anordnung der Rollen 120 und 122 möglich. So könnte in Fig. 2 die Rolle 120 z.B. auf der anderen Bandseite angeordnet sein, müsste dann aber das Trum 116 statt nach links nach rechts aus der gestreckten Stellung drücken. Bei der Anordnung nach Fig. 2 muss die Feder 124 die Stellbewegung der Rolle 122 ausgleichen. Bei der Ausführungsform nach Fig. 3 ist dies nicht nötig, es kann dort also eine kleinere, härtere Feder verwendet werden.

Bei der Ausführungsform nach Fig. 3 ist mit der Kolbenstange 126 ein Lagerelement 132 verbunden, in dem die Rolle 122 fest gelagert ist. Die Rolle 120 ist in einem Schieber 134 gelagert, der im Lagerelement 132 quer zur Laufrichtung des Bandes 110 begrenzt beweglich ist, wozu Führungsschlitze 136 zur Aufnahme des Schiebers 134 dienen können. Der Schieber 134 ist am Lagerelement 132 über eine Feder 138 abgestützt. Diese Feder übernimmt im wesentlichen die Aufgabe, das Band 110 unter der gewünschten Spannung zu halten.

Wird der Kolben 130 bewegt, nehmen die Rollen 120 und 122 an dieser Bewegung teil. Da beide Rollen 120 und 122 an der gleichen Fläche des Bandes 110 anliegen, wird das eine Trum 116 um annähernd das gleiche Mass länger, um das das andere Trum 118 sich verkürzt und umgekehrt. Geringe Abweichungen, die mit dem Verlassen einer symmetrischen Position beider Trums 116 und 118 auftreten, können von der Feder 138 ausgeglichen werden.

Die Wirkungsweise wäre gleich, wenn beide Rollen 120 und 122 auf der jeweils anderen Bandseite angeordnet wären, es müsste nur die Anordnung so getroffen sein, wie dies am Ende der Beschreibung der Fig. 2 erläutert ist. Unter dieser Voraussetzung, dass nämlich in der einen Endstellung das eine Trum gestreckt, das andere dagegen maximal ausgelenkt ist und umgekehrt, könnte man mit den gleichen Vorteilen hinsichtlich der Dimensionierung der Feder 138 die Rolle 120 auch mittels des Schiebers 134 in einem zur Kolbenstange 126 und der an dieser gelagerten Rolle 122 zwangsweise gegenläufig bewegten Lagerelement anordnen, wenn dies auch insgesamt wegen der aufwendigeren Konstruktion nicht sehr zweckmässig erscheinen mag. Es zeigt dies aber, dass der Bandtrieb mit Phasenverschiebung auf sehr verschiedene Weise verwirklicht werden kann und nicht auf die erläuterten Beispiele beschränkt ist.

Um die Bandspannung justieren zu können, wird vorzugsweise die Kraft der Feder 124 bzw. 138 einstellbar sein, wie dies bei Bandtrieben an sich bekannt ist.

Statt des in der Zeichnung gezeigten und vorstehend beschriebenen Kurbeltriebs 100 können andere Einrichtungen zur Kraftübertragung auf mechanischem oder z.B. auch hydraulischem Wege verwendet werden, sofern sie mit der Möglichkeit der Phasenverschiebung zwischen An- und Abtrieb ausgestattet sind.

Wird eine so ausgestaltete Verbrennungskraftmaschine 40 betrieben, so wird vom Start weg die Verbrennungskraftmaschine mit einer der Drehzahl proportionalen Ladeluftmenge versorgt, wobei sich der Ladedruck nahezu unabhängig von der Drehzahl einstellt. Beim Start der Verbrennungskraftmaschine und bei niedrigen Drehzahlen wirkt der Entspanner-Lader 10 wie ein mechanischer Lader. Vorhandene Abgasenergie kann unterstützend wirksam werden. Im mittleren Drehzahlbereich der Verbrennungskraftmaschine steigt die Abgasenergie so weit an, dass sie ausreicht, die Verdichterleistung zu decken. Würde man in dieser Betriebssituation den Entspanner-Lader 10 von der Abtriebswelle 38 der Verbrennungskraftmaschine 40 abkuppeln, so würde der Entspanner-Lader 10 wie ein Abgaslader weiterlaufen, d.h. die Druckimpulse des Abgases würden wechselseitig mit den Luftkräften den Kolben bzw. die Trennwand 16 hin- und herbewegen und dadurch die Aufladung der Verbrennungskraftmaschine 40 bewirken.

Bei höherer Drehzahl und Belastung des Motors übersteigt die Abgasenergie das für die Verdichtung und Ausschiebung der Ladeluft erforderliche Mass. Diese Energie wird nunmehr vom Entspanner-Lader 10 über den Kurbeltrieb 36 an die Abtriebswelle 38 der Verbrennungskraftmaschine 40 übertragen. Dadurch steigt die Nettoleistung des Motors und der Wirkungsgrad verbessert sich entsprechend. Durch entsprechende Einstellung des Bandtriebs 100 wird dabei sichergestellt, dass der Abgasimpuls auf die Trennwand 16 auftrifft, wenn diese ihren mit dem Abgasimpuls gleichsinnigen Hub beginnt.

Entfällt in bestimmten Betriebssituationen der Wunsch nach Aufladung, was insbesondere bei Ottomotoren der Fall ist, dann kann die Verdichterfunktion beispielsweise durch Offenhalten eines Verdichterventils abgeschaltet werden, die Verdichterseite des Entspanner-Laders 10 also druck- und wirkungslos gemacht werden und der Entspanner-Lader 10 nur noch als Entspanner betrieben werden, d.h. zur Rückgewinnung von Arbeit aus der Abgasenergie.

Der Entspanner-Lader 10 kann also die Wirkungsweisen eines mechanischen Laders, eines Abgasladers und eines Abgasentspanners übernehmen und diese Funktionen stufenlos von einem Extrem zum anderen durchführen. Der Betrieb vom mechanischen Aufladen über Abgasaufladung bis zum Überwiegen der Abgasentspannung über die Laderfunktion kann hierbei ohne zusätzliche Regeleinrichtungen geschehen. Voraussetzung ist allerdings, dass die Abgaszuführung derart pulsierend erfolgt, dass jeweils beim Abwärtshub des Entspanner-Laders der Abgasdruck in der Abgaskammer 18 höher ist als beim Aufwärtshub. Dies wird dadurch sichergestellt, dass die natürlichen Druckstösse beim Öffnen des Auslassventils eines Zylinders der Verbrennungskraftmaschine 40 im rechten Augenblick, also zu Beginn des Abwärtshubs des Entspanner-Laders 10 in der Abgaskammer 18 eintreffen, oder dass die bereits kurz beschriebene Taktsteuerung durch ein Taktgeberventil 50 durchgeführt wird.

## Patentansprüche

1. Verbrennungskraftmaschine (40) mit einem mechanisch durch die Abtriebswelle (38) und/oder durch Abgasenergie betreibbaren Lader (10) zur Verdichtung und Förderung der Ladeluft, der mindestens jeweils eine Abgaskammer (18) und eine Ladeluftkammer (20) aufweist, die durch eine bewegliche Trennwand (16) voneinander getrennt sind und von denen die Abgaskammer (18) mit einem Abgaseinlass (22) und einem Abgasauslass (24) und die Ladeluftkammer (20) mit einem Ladelufteinlass (26) und einem Ladeluftauslass (28) versehen ist, wobei dem Abgaseinlass (22) eine Einrichtung (50) zur taktweisen Beaufschlagung der Abgaskammer (18) mit Abgas zugeordnet ist und die Trennwand (16) zusätzlich durch eine zur Kraftübertragung in beiden Richtungen geeignete Kraftübertragungseinrichtung (30, 36, 44, 100) mit der Abtriebswelle (38) der Verbrennungskraftmaschine (40) verbunden ist, dadurch gekennzeichnet, dass die Kraftübertragungseinrichtung (30, 36, 44, 100) eine Vorrichtung (100) zur Veränderung der Phasenlage zwischen An- und Abtriebsseite aufweist.

2. Verbrennungskraftmaschine nach Anspruch 1, dadurch gekennzeichnet, dass die Kraftübertragungseinrichtung (30, 36, 44, 100) unterbrechbar ist.

3. Verbrennungskraftmaschine nach einem der Ansprüche 1 oder 2, dadurch gekennzeichnet, dass als Einrichtung zur taktweisen Beaufschlagung der Abgaskammer (18) das Auslassventil bzw. die Auslassventile der Verbrennungskraftmaschine (40) dienen.

4. Verbrennungskraftmaschine nach einem der Ansprüche 1 oder 2, dadurch gekennzeichnet, dass als Einrichtung zur taktweisen Beaufschlagung der Abgaskammer (18) ein Taktgeberventil (50) dient.

5. Verbrennungskraftmaschine nach Anspruch 4, dadurch gekennzeichnet, dass dem Taktgeberventil (50) ein Abgassammler (48) vorgeschaltet ist.

6. Verbrennungskraftmaschine nach einem der vorhergehenden Ansprüche, dadurch gekennzeichnet, dass die Kraftübertragungseinrichtung (30, 36, 44, 100) einen Bandtrieb (100) umfasst, bei dem das Verhältnis der Bandlängen zwischen treibendem und losem Bandtrum steuerbar ist.

7. Verbrennungskraftmaschine nach einem der vorhergehenden Ansprüche, dadurch gekennzeichnet, dass das Luftfördervolumen der Ladeluftkammer(n) des Laders (10) der im zu ladenden Motorzylinder gewünschten Ladeluftmenge entspricht.

8. Verbrennungskraftmaschine nach einem der Ansprüche 1 bis 6, dadurch gekennzeichnet, dass das Luftfördervolumen der Ladeluftkammer(n) des Laders (10) der im zu ladenden Motorzylinder zusätzlich zu einer vom Motorkolben angesaugten Luftmenge zu deren Verdichtung auf den Ladedruck gewünschten Luftmenge entspricht.

## Revendications

1. Machine à combustion interne (40) avec un compresseur (10) susceptible d'être entraîné mécaniquement au moyen de l'arbre de sortie (38) et/ou au moyen de l'énergie des gaz d'échappement, pour la compression et l'alimentation de l'air d'admission, qui comporte au moins respectivement une chambre de gaz d'échappement (18) et une chambre d'air d'admission (20), ces chambres étant séparées l'une de l'autre au moyen d'une cloison de séparation mobile (16), et comportant, la chambre de gaz d'échappement (18), une entrée de gaz d'échappement (22) et une sortie de gaz d'échappement (24) et la chambre d'air d'admission (20), une entrée d'air d'admission (26) et une sortie d'air d'admission (28), un dispositif (50) pour l'alimentation en cadence de gaz d'échappement à la chambre de gaz d'échappement (18) étant rattaché à l'entrée de gaz d'échappement (22), et la cloison de séparation (16) étant en outre reliée à l'arbre de sortie (38) de la machine à combustion interne (40) au moyen d'un dispositif de transmission de force motrice (30, 36, 44, 100) capable de transmettre une force motrice dans les deux sens, caractérisée en ce que le dispositif de transmission de force motrice (30, 36, 44, 100) comporte un dispositif (100) pour modifier la relation des phases entre le côté d'entraînement et le côté de sortie.

2. Machine à combustion interne suivant la revendication 1, caractérisée en ce que le dispositif de transmission de force motrice (30, 36, 44, 100) est susceptible d'être mis hors circuit.

3. Machine à combustion interne suivant l'une des revendications 1 ou 2 caractérisée en ce que la ou les soupapes de sortie de la machine à combustion interne (40) servent de dispositif pour l'alimentation en cadence de la chambre de gaz d'échappement (18).

4. Machine à combustion interne suivant l'une des revendications 1 ou 2 caractérisée en ce qu'une soupape distributrice de cadence (50) sert de dispositif pour l'alimentation en cadence de la chambre de gaz d'échappement (18).

5. Machine à combustion interne suivant la revendication 4 caractérisée en ce qu'un collecteur de gaz d'échappement (48) est monté en amont de la soupape distributrice de cadence (50).

6. Machine à combustion interne suivant l'une quelconque des revendications précédentes caractérisée en ce que le dispositif de transmission de force motrice (30, 36, 44, 100) comprend une transmission à courroie (100) par laquelle on peut commander le rapport des longueurs de courroie entre le brin de courroie conducteur et le brin de courroie conduit.

7. Machine à combustion interne suivant l'une quelconque des revendications précédentes caractérisée en ce que le volume d'air introduit dans les chambres d'air d'admission du compresseur (10) correspond à la quantité d'air d'admission désirée dans le cylindre du moteur à alimenter.

8. Machine à combustion interne suivant l'une quelconque des revendications 1 à 6, caractérisée en ce que le volume d'air introduit dans les chambres d'air d'admission du compresseur (10) correspond à la quantité d'air d'admission désirée dans le cylindre du moteur à alimenter, pour sa compression à la pression d'admission, en complément à une quantité d'air aspirée par le piston du moteur.

**Claims**

1. An internal combustion engine (40) with a supercharger (10) driven mechanically by the output shaft (38) of the engine and/or by means of exhaust energy for the compression and transport of an air charge, the supercharger comprising at least one exhaust chamber (18) and one air charge chamber (20), which are separated from each other by a movable partition (16), the exhaust chamber (18) being equipped with an exhaust inlet (22) and an exhaust outlet (24) and the air charge chamber (20) with an air charge inlet (26) and an air charge outlet (28), the exhaust inlet (22) being provided with a system (50) for the timed introduction of exhaust into the exhaust chamber (18) and the partition (16) being additionally connected with the output shaft (38) of the engine (40) by means of a power transfer installation (30, 36, 44, 100) in which the power transfer can become effective in both directions, characterized in that the power transfer installation (33, 36, 44, 100) comprises a device (100) for the alteration of the phase position between its input and output side.

2. An internal combustion engine as claimed in claim 1, characterized in that the power transfer installation (30, 36, 44, 100) can be interrupted.

3. An internal combustion engine as claimed in one of claims 1 or 2, characterized in that the system for the timed introduction of exhaust into the exhaust chamber (18) is the exhaust valve or are the exhaust valves, respectively, of the internal combustion engine.

4. An internal combustion engine as claimed in one of claims 1 or 2, characterized in that the system for the timed introduction of exhaust into the exhaust chamber (18) is a pulse generator valve (50).

5. An internal combustion engine as claimed in claim 4, characterized in that an exhaust collector (48) is arranged upstream of the pulse generator valve (50).

6. An internal combustion engine as claimed in any one of the preceding claims, characterized in that the power transfer installation (30, 36, 44, 100) comprises a belt drive (100) in which the proportion of the belt length between driving and loose belt strand is adjustable.

7. An internal combustion engine as claimed in any one of the preceding claims, characterized in that the air transport volume of the air charge chamber or chambers, respectively, of the supercharger (10) corresponds to the wanted ait charge amount of the engine cylinder to be charged.

8. An internal combustion engine as claimed in any one of claims 1 to 6, characterized in that the air transport volume of the air charge chamber or chambers, respectively, of the supercharger (10) corresponds to the air charge amount wanted in the engine cylinder to be charged additionally to an air charge amount drawn in by the engine piston, in order to achieve the charging pressure.

Fig. 1

Fig. 2

Fig. 3